Europäisches Patentamt

European Patent Office

Office européen des brevets

(11) Veröffentlichungsnummer: **0 229 899 B1**

(12) **EUROPÄISCHE PATENTSCHRIFT**

(45) Veröffentlichungstag der Patentschrift: **03.07.91**

(21) Anmeldenummer: **86115068.8**

(22) Anmeldetag: **30.10.86**

(51) Int. Cl.⁵: **C09D 167/00, C09D 167/08**

(54) **Anstrichfarbe.**

(30) Priorität: **10.01.86 DE 3600503**

(43) Veröffentlichungstag der Anmeldung:
**29.07.87 Patentblatt 87/31**

(45) Bekanntmachung des Hinweises auf die
Patenterteilung:
**03.07.91 Patentblatt 91/27**

(84) Benannte Vertragsstaaten:
**AT BE CH DE ES FR GB GR IT LI LU NL SE**

(56) Entgegenhaltungen:
**DE-A- 3 244 590      FR-A- 2 562 903
US-A- 1 885 024      US-A- 2 178 474
US-A- 2 178 475      US-A- 2 331 544
US-A- 2 379 070      US-A- 3 008 847**

(73) Patentinhaber: **DESOWAG Materialschutz
GmbH
Rossstrasse 76 Postfach 32 02 20
W-4000 Düsseldorf 30(DE)**

(72) Erfinder: **Goletz, Peter
Weserweg 90
W-4150 Krefeld 1(DE)**
Erfinder: **Naczinski, Luzian
Nierster Strasse 18
W-4005 Meerkamp-Lank(DE)**

(74) Vertreter: **Seiler, Siegfried
Langhansstrasse 6
W-5650 Solingen 11(DE)**

**Beschreibung**

Die vorliegende Erfindung betrifft eine Anstrichfarbe enthaltend mindestens ein Bindemittel oder Bindemittelgemisch, ein flüssiges Gemisch als Hauptbestandteil bestehend aus einem wasserunlöslichen organisch-chemischen, schwerflüchtigen Lösungsmittel oder Lösungsmittelgemisch, vorzugsweise auf der Basis eines flüssigen aliphatischen und/oder aromatischen Kohlenwasserstoffes und Wasser, sowie ein Tensid oder Tensidgemisch und ein wasserlösliches oder wasserunlösliches Pigment oder Pigmentgemisch und/oder Füllstoff oder Füllstoffgemisch und/oder Farbstoffe sowie ggf. Zusatzstoffe, vorzugsweise Verarbeitungshilfsmittel, Sikkative und Biozide.

Lösungsmittelharzemulsionen mit einer kontinuierlichen, Harz enthaltenden Ölphase, Emulgatoren, Pigmenten und einem von Titan abgeleiteten Kupplungsmittel, nämlich Pyrophosphatotitan, sind bereits zur Herstellung von emailleähnlichen Überzügen bekannt (vgl. DE-OS 32 44 590. Diese emailleähnlichen Emulsionen müssen unter Verwendung der speziellen von Titan abgeleiteten Kupplungsmitteln hergestellt werden und sind nur für Emaille bzw. Emaillefarben auf Metalluntergrund geeignet.

Ziel und Aufgabe der vorliegenden Erfindung war es, eine Anstrichfarbe mit verbesserten Eigenschaften zu finden. Sie sollte insbesondere eine gute Haft- und/oder Wasserbeständigkeit sowie eine gute Penetration bei Holz, Holzwerkstoffen, Cellulosematerial sowie anderen offenporigen Materialien aufweisen. Weiterhin sollte die Anstrichfarbe eine absperrende Wirkung gegen mobile, insbesondere lösliche Holzinhaltsstoffe bewirken. Das Anstrichmittel sollte auch ermöglichen, matte oder seidenmatte Farbtöne oder holzfarbene Maserungen auf dem Holz zu erzielen oder als korrosionsschützende Farbe eingesetzt werden können.

Erfindungsgemäß wurde festgestellt, daß diesen Zielen und Aufgaben eine Anstrichfarbe gerecht wird, enthaltend mindestens ein Bindemittel oder Bindemittelgemisch, ein flüssiges Gemisch als Hauptbestandteil bestehend aus einem wasserunlöslichen organisch-chemischen, schwerflüchtigen Lösungsmittel oder Lösungsmittelgemisch, vorzugsweise auf der Basis eines flüssigen aliphatischen und/oder aromatischen Kohlenwasserstoffes, und Wasser, sowie ein Tensid oder Tensidgemisch und ein wasserunlösliches oder wasserschwerlösliches Pigment oder Pigmentgemisch und/oder Füllstoff oder Füllstoffgemisch und/oder Farbstoffe sowie ggf. Zusatzstoffe, vorzugsweise Verarbeitungshilfsmittel, Sikkative und Biozide. Gemäß der Erfindung ist der Festkörpergehalt der Anstrichfarbe, bezogen auf den Gesamtgehalt an Bindemitteln (berechnet als Feststoff), vorzugsweise Alkydharz, einschließlich der wasserunlöslichen oder wasserschwerlöslichen Pigmente und/oder Füllstoffe größer als 38 Gew.-%, vorzugsweise größer als 44 Gew.%. Das Gewichtsverhältnis von Bindemittel zu Pigment(en) und/oder Füllstoff(en) beträgt 1 : 1 bis 1 : 3, vorzugsweise 1 : 1,1 bis 1 : 2,3. Das Gewichtsverhältnis von Bindemittel, vorzugsweise Alkydharz, zu dem in der Anstrichfarbe enthaltenden organisch-chemischen schwerflüchtigen Lösungsmittel oder Lösungsmittelgemisch (ausgenommen trocknende pflanzliche oder tierische Öle) ist 20 : 1 bis 1,8 : 1, vorzugsweise 5 : 1 bis 2 : 1. Der Gewichtsanteil an Tensid oder Tensidgemisch beträgt 0,1 bis 3 Gew.-%, vorzugsweise 0,6 bis 2 Gew.-%. Als Restbestandteile sind Wasser sowie ggf. andere Zusatzstoffe, vorzugsweiseVerarbeitungshilfsmittel, Sikkative, Verdickungsmittel, Hilfslösemittel, Biozide, in der Anstrichfarbe enthalten.

Der Gewichtsanteil an wasserunlöslichen oder wasserschwerlöslichen Pigment(en) und/oder wasserunlöslichen oder wassserschwerlöslichen Füllstoff(en) in der Anstrichfarbe ist größer als 24 Gew.-%, vorzugsweise größer als 29 Gew.-%.

Das in der Anstrichfarbe enthaltende Tensid oder Tensidgemisch weist einen Gesamt-HLB-Wert von 7 - 18, vorzugsweise von 8 - 17, auf.

Das Tensid oder Tensidgemisch besteht aus mindestens einem Alkylarylsulfonat, einem Derivat der Alkylarylsulfonsäure und/oder einem Polyoxyethylenderivat und/oder einem Polyalkylen- oder Polyalkylglykoläther und/oder einer eine oder mehrere Polyoxyethylengruppen und/oder eine oder mehrere Fettsäuregruppen enthaltenden oberflächenaktiven organisch-chemischen Verbindung oder enthält diese(s) zu mehr als 65 Gew.-Teilen (bezogen auf 100 Gew.-Teile eingesetztes Tensidgemisch), vorzugsweise zu mehr als 80 Gew.-Teilen.

Der Bindemittelgehalt (berechnet als Feststoff) in der Anstrichfarbe ist größer als 15 Gew.-%, vorzugsweise größer als 17 Gew.-%, und das Bindemittel besteht vorzugsweise mindestens aus einem öllöslichen Alkydharz und/oder mindestens einem trocknenden pflanzlichen Öl.

Gemäß einer bevorzugten Ausführungsform ist eine Mischung von zwei oder mehreren Tensiden im Gewichtsverhältnis von 20 : 1 bis 1 : 20, vorzugsweise 5 : 1 bis 1 : 5, in der Anstrichfarbe enthalten.

Den entsprechenden HLB-Wert weisen u. a. folgende Tenside allein oder im Gemisch auf:

Alkylarylsulfonat, Ca-Alkylarylsulfonat, Polyoxyäthylen (30)- Nonylphenol, Polyoxyäthylen-(2)- bzw. Polyoxyäthylen-(10)-Oleylalkohol, Polyoxyäthylen-Sorbitol-Oleat-Laurat, Polyoxyäthylen (20)-Sorbitan-Laurat, Polyoxyäthylen-Monooleat, Polyoxyäthylen-Monostearat, Polyalkylglykoläther, Sorbitan-Monolaurat, Isopropylamin-dodecylbenzyl-sulfonat allein oder in Abmischung untereinander.

Die Bestimmung von HLB-Werten der Tenside ist aus "The Atlas HLB-System" Specialty Chemicals Company of ICI Americas Inc., Wilminton, Delaware (1963) und aus G.E. Petrowski und J.R. Vanatta, J.Am.Chem. Soc., Seiten 284 bis 289 (August 1973) ersichtlich.

Nach einer bevorzugten Ausführungsform ist in dem Holzschutzanstrichmittel oder Holzkonservierungsmittel ein Tensidgemisch enthalten, das aus einem Gemisch von Polyoxyethylen(30)-Nonylphenol und/oder Polyalkylenglykolester und/oder Polyoxyäthylen-Sorbitan-Oleat-Laurat oder Polyoxyäthylen-Sorbitan-Oleat-Laurat und/oder Isopropylamin-dodecylbenzylsulfonat und/oder Polyoxyäthylen-(10)-und/oder Polyoxyäthylen-(2)-Oleylalkohol, besteht. Bei einem Gemisch von Polyoxyethylen(30)-Nonylphenol und Polyalkylglykolester bzw. Polyoxyethylen-(2)- und. Polyoxyethylen-(10)-Oleylalkohol wird im allgemeinen ein Gewichtsverhältnis 5 : 1 bis 1 : 5, vorzugsweise 2 : 1 bis 1 : 2, eingehalten.

Bei einem Gemisch von Polyoxyethylen(30)-Nonylphenol und Polyalkylen- oder Polyalkylglykolester oder -äther und Isopropylamin-dodecylsulfonat ist zweckmäßig ein Gewichtsverhältnis 20 : 20 : 1 bis 1 : 1 : 5, vorzugsweise 10 : 10 : 1 bis 1 : 1 : 3, im Holzkonservierungsmittel oder der Anstrichfarbe enthalten.

Nach einer anderen bevorzugten Ausführungsform besteht das Tensid aus einem Gemisch von Alkylarylsulfonat, vorzugsweise Ca-Alkylarylsulfonat und Isopropylamin-dodecylbenzylsulfonat. Bei diesem Gemisch wird ein Gewichtsverhältnis 10 : 1 bis 1 : 5, vorzugsweise 5 : 1 bis 2 : 1, eingehalten.

Als wasserunlösliche organisch-chemische schwerflüchtige Lösungsmittel oder Lösungsmittelgemische werden die an sich bekannten aromatischen und/oder aliphatischen Kohlenwasserstoffe oder Gemische derselben eingesetzt. Bevorzugt werden solche Lösemittel oder Lösemittelgemische verwendet, die eine Oberflächenspannung von 16 bis 37 mN/m, vorzugsweise 17 bis 35 mN/m, (gemessen bei 20 °C) aufweisen und/oder die eine elektrische Leitfähigkeit von $10^{-10}$ - $10^{-16}$ ohm bei 20° besitzen.

Bevorzugt werden wasserunlösliche organisch-chemische Lösungsmittel oder Lösungsmittelgemische eingesetzt, die schwerflüchtig sind, eine Verdunstungszahl über 35 und einen Flammpunkt oberhalb 323 K aufweisen. Beispiele für derartige Lösungsmittel sind entsprechende Mineralöle oder deren Aromatenfraktionen, mineralölhaltige Lösungsmittelgemische, vorzugsweise Testbenzin und/oder Alkylbenzole. Es können jedoch auch Lösungsmittelgemische eingesetzt werden, bei denen das schwerflüchtige, organische Lösungsmittel durch ein oder mehrere leicht oder mittelflüchtige Lösungsmittel ersetzt sind.

Nach einer bevorzugten Ausführungsform weist das in der Anstrichfarbe enthaltende Alkydharz oder Alkydharzgemisch eine Säurezahl (gemessen nach DIN 53 402) zwischen 1 - 45, vorzugsweise 2 - 20, eine Öllänge von 30 - 75, vorzugsweise 40 - 70, und einen Phthalsäureanteil zwischen 20 - 40 Gew.-%, vorzugsweise 25 - 35 Gew.-% auf. Die Bezeichnung Öllänge gibt den Ölgehalt im Alkydharz wieder, vorzugsweise den Anteil (Gehalt) an Fettsäuren, umgerechnet insbesondere auf Triglycerid.

Nach einer bevorzugten Ausführungsform ist der Gewichtsanteil des wasserunlöslichen organisch-chemischen schwerflüchtigen öligen oder ölartigen Lösungsmittels oder Lösungsmittelgemisches in der Anstrichfarbe kleiner ist als der Gewichtsanteil Wasser.

Nach einer weiteren bevorzugten Ausführungsform beträgt das Gewichtsverhältnis der Gewichtsanteile des wasserunlöslichen organisch-chemischen schwerflüchtigen vorzugsweise öligen oder ölartigen Lösungsmittels oder Lösungsmittelgemisches, einschließlich des darin gelösten Alkydharzes und/oder trocknenden pflanzlichen Öles, zu den in der Anstrichfarbe enthaltenen Gewichtsanteil Wasser 1,5 : 1 bis 1 : 2,3, vorzugsweise 1,2 : 1 bis 1 : 1,8.

Nach einer anderen bevorzugten Ausführungsform liegt der Gewichtsanteil des Wassers in der Anstrichfarbe um mehr als das 2,5fache, vorzugsweise mehr als das 3,5fache, über den Gewichtsmengen der im Mittel (in der Anstrichfarbe) enthaltenden organisch-chemischen, wasserunlöslichen vorzugsweise öligen oder ölartigen organisch-chemischen Lösungsmittel oder des Lösungsmittelgemisches.

Als Pigmente oder Farbstoffe werden die an sich bekannten anorganischen Metalloxidpigmente und/oder organische Pigmente oder Farbstoffe, wie z. B. Phthalocyanine, Monoazopigmente, Ruß und dgl. eingesetzt, wobei die Pigmente und/oder Farbstoffe an sich oder in deren handelsüblichen Form, z. B. gießfähige oder pastöse Zubereitungen, Pasten, Pulvern und dgl. eingesetzt werden können.

Das erfindungsgemäße Mittel ist temperaturstabil im Bereich von T 233 K bis T 318 K. Trotz des Vorhandenseins von Bestandteilen, die der Öl- oder Wasserphase zuzuordnen sind, tritt eine Pigmentflokulation nicht ein. Bei dem Anstrich auf Holz weist der Anstrich eine gute Eindringung und Haftfestigkeit auf.

Nach einer Ausführungsform enthält die Anstrichfarbe 0,1 bis 4 Gew.-%, vorzugsweise 0,2 bis 3 Gew.-%, mindestens eines Biozides oder Biozidgemisches, vorzugsweise eines Fungizides oder Fungizidgemisches.

Die wasserunlöslichen oder wasserschwerlöslichen Pigmente und/oder Füllstoffe in der Anstrichfarbe bestehen nach einer anderen Ausführungsform ganz oder teilweise aus Korrosionsschutzpigmenten oder enthalten diese im Gemisch.

Die Erfindung betrifft weiterhin ein Verfahren zur Herstellung der Anstrichfarbe. Gemäß dem erfindungsgemäßen Verfahren wird bzw. werden bei einer Arbeits- bzw. Verfahrenstemperatur von 278 K- 308 K, vorzugsweise 280 K - 303 K, in einem schnellaufenden Mischaggregat, vorzugsweise einem Schnellrührer, Dissolver, einer Kolloidmühle oder einem Dispergator das wasserunlösliche organisch-chemische, schwerflüchtige Lösungsmittel oder Lösungsmittelgemisch einschließlich der darin gelösten oder löslichen Bestandteile (ölige Phase) oder ein oder mehrere Bestandteile der öligen Phase mit Wasser oder den Bestandteilen der wäßrigen Phase vermischt, wobei das Tensid und/oder Tensidgemisch in einer oder in den beiden Phasen gelöst oder homogen bzw. nahezu homogen verteilt wird.

Die Durchmischung wird mit einer derartigen Geschwindigkeit (unter Berücksichtigung des jeweiligen Abstandes des Rührwerkes von der Kesselwand, dem Radius des Rührers und dgl.) und so lange durchgeführt, bis die Verteilung der emulgierten Harzteilchen einen mittleren Durchmesser im Bereich von 0,1 - 15 /um, vorzugsweise 0,5 - 4 /um, erreicht hat.

Nach einer bevorzugten Ausführungsform wird die Durchmischung mit einer Rand- und/oder Umfangsgeschwindigkeit von 10 - 40 m/sec., vorzugsweise 15 - 30 m/sec., durchgeführt.

Das Wasser oder die wäßrige Phase wird gemäß dem erfindungsgemäßen Verfahren mit einer Zuführungsgeschwindigkeit von 10 - 100 1/min., vorzugsweise 30 - 70 1/min. in die ölige oder ölartige Phase (wasserunlösliches organisch-chemisches Lösungsmittel und darin gelöste Bestandteile, die in dem Mischbehälter vorgelegt sind) eingeleitet.

Der Durchmesser der Scheibe oder des Rührers beträgt zweckmäßig 1/4 d bis 3/4 d (d = Durchmesser des Mischbehälters bzw. Kessels), vorzugsweise 0,3 d - 0,4 d.

Bei der Verwendung einer Kolloidmühle erfolgt die Zuleitung von zwei oder mehreren Bestandteilen der Anstrichfarbe oder der gesamten Anstrichfarbe über eine Dosierpumpe, wobei das Verhältnis der öligen Phase zu der wäßrigen Phase mit Tensid bzw. öligen Phase mit Tensid zu der wäßrigen PPPPPhase 20 : 1 bis 1 : 1, vorzugsweise 5 : 1 bis 2 : 1, beträgt.

Nach einer vorteilhaften Ausführungsform des erfindungsgemäßen Verfahrens wird somit die ölige Phase, bestehend aus Alkydharz, organischen Lösemitteln, anorganischen und/oder organischen Pigmenten, Trockenstoffen und ggf. Lackadditiven, wie z.B. Antiabsetzmitteln, Dispergierhilfsmitteln, Trocknungsverzögerern, Fungizide oder Insektizide vorgelegt und darin das Tensid und/oder Tensidgemisch unter Rühren eingerührt. Nach Homogenisierung wird unter intensiven Rühren, z. B. mit Hilfe eines Schnellrührers oder Dissolvers, bei einer Randgeschwindigkeit der Rührscheibe vorzugsweise von 15 - 30 m/sec., das Wasser bei einer Zuführgeschwindigkeit vorzugsweise von 30 - 70 1/min., eingearbeitet.

Die Arbeitstemperatur der beiden flüssigen Phasen soll vorzugsweise T = 280 K bis T = 303 K betragen. In diesem Temperaturbereich lassen sich innerhalb von 10 Minuten nach Beendigung der Wasserzufuhr Dispersionsfeinheiten im Bereich von 1 - 3 /um erreichen.

Das Tensid und/oder Tensidgemisch kann sowohl in die ölige als auch in die wäßrige Phase vor der Vereinigung im Dispergieraggregat eingearbeitet werden.

Nach einer anderen Ausführungsform des erfindungsgemäßen Verfahrens unter Verwendung einer Kolloidmühle oder eines Homogenisators erfolgt die Arbeitsweise ähnlich wie bei dem vorgenannten Verfahren, jedoch werden hier vorzugsweise die ölige oder wäßrige Phase mittels einer Dosiervorrichtung kurz vor dem Erreichen des Dispergierwerkes (Mahlscheiben) vereinigt. Das Verhältnis der öligen zu der wäßrigen Phase sollte vorzugsweise im Bereich von 2,5 : 1 bis 1 : 2,5 liegen. Zweckmäßig beträgt das Verhältnis 1,5 : 1 bis 1 : 2,3, vorzugsweise 1,2 : 1 bis 1 : 1,8. Die "Vermahlung" erfolgt entsprechend der bei diesen Aggregaten üblichen Technik (Homogenisierungsdruck : 100 : 300 atü).

Bei diesem Verfahren wird das Endprodukt vorzugsweise in kontinuierlichem Verfahren, also ununterbrochen, konfektioniert, während bei dem erstgenannten Verfahren vorzugsweise eine diskontinuierliche Herstellung erfolgt.

Beispiele für die erfindungsgemäße Anstrichfarbe

1. Beispiel:

| | |
|---|---|
| Alkydharz (berechnet als Feststoff) (Öllänge: 40 - 70) (Säurezahl: 2 - 20) | 14,0 Gew.-% |
| wasserunlösliches organisch-chemisches Lösungsmittelgemisch | 6,0 Gew.-% |
| Tenside bzw. Tensidgemisch und/oder Netzmittel * | 0,6 Gew.-% |
| Additive, vorzugsweise Siccative und Verdickungs-mittel | 0,8 Gew.-% |
| Titandioxid und/oder Füllstoffe | 25,0 Gew.-% |
| pflanzliches Öl | 4,0 Gew.-% |
| Biozid oder Biozidgemisch | 0,7 Gew.-% |
| Wasser | 48,9 Gew.-% |
| | 100,0 Gew.-% |

5

* Ausführungsform: (Tenside
bzw. Tensidgemisch und/oder
Netzmittel gemäß Beispiel 1)

| 1a) | Isopropyl-dodecylbenzsulfonat | 0,5 Gew.-% |
| | Polyoxyethylen-Sorbitan-oleat-Laurat | 0,1 Gew.-% |
| 1b) | Polyoxyethylen (30)-Nonylphenol | 0,3 Gew.-% |
| | Polyalkyl-glykoläther | 0,3 Gew.-% |
| 1c) | Ca-Alkylarylsulfonat | 0,3 Gew.-% |
| | Polyoxyethylen(2)-oleylalkohol | 0,3 Gew.-% |
| 1d) | Polyoxyethylen(2)-oleylalkohol | 0,1 Gew.-% |
| | Polyoxyethylen(10)-oleylalkohol | 0,5 Gew.-% |

EP 0 229 899 B1

2. Beispiel:

Alkydharz (berechnet als Feststoff)

(Öllänge: 40 - 70)

(Säurezahl: 2 - 20)                          15,0 Gew.-%

wasserunlösliches, organisch-

chemisches Lösungsmittel oder

Lösungsmittelgemisch                         6,0 Gew.-%

Tensidgemisch bestehend aus

Isopropyl-

dodecylbenzsulfonat                          1,0

und Polyalkylglykoläther                     0,5 Gew.-%

Additive, vorzugsweise

Siccative und Verdickungsmittel                                       1,0 Gew.-%

Titandioxid und/oder

Füllstoffe                                   30,0 Gew.-%

pflanzliches Öl                              3,0 Gew.-%

Biozid oder Biozidgemisch                    1,2 Gew.-%

7

Wasser                                              42,3 Gew.-%

                                                    ─────────────

                                                    100,0 Gew.-%

3. Beispiel:

Alkydharz (berechnet als Feststoff)

(Öllänge: 40 - 70)

(Säurezahl: 2 - 20)                                 16,0 Gew.-%

wasserunlösliches organisch-

chemisches Lösungsmittelgemisch                      7,0 Gew.-%

Tenside bzw. Tensidgemsich

und/oder Netzmittel *                                0,8 Gew.-%

Additive, vorzugsweise

Siccative und Verdickungsmittel                                               1,0 Gew.-%

Titandioxid und/oder

Füllstoffe                                          35,8 Gew.-%

pflanzliches Öl                                      2,8 Gew.-%

8

Biozid oder Biozidgemisch                         0,3 Gew.-%

Wasser                                           36,3 Gew.-%

                                                ―――――――――――――

                                                100,0 Gew.-%


\* Ausführungsform:


3a)  Isopropyl-

     dodecylbenzsulfonat                          0,2 Gew.-%

     Polyoxyethylen-

     Sorbitan-oleat-Laurat                        0,6 Gew.-%


3b)  Polyoxyethylen (30)-

     Nonylphenol                                 0,15 Gew.-%

     Polyalkyl-

     glykoläther                                 0,65 Gew.-%


4. Beispiel:


Alkydharz (berechnet als Feststoff)

(Öllänge: 40 - 70)

(Säurezahl: 2 - 20)                              17,2 Gew.-%


wasserunlösliches organisch-

chemisches Lösungsmittelgemisch      7,0 Gew.-%

Tenside bzw. Tensidgemisch

und/oder Netzmittel bestehend aus

Isopropyl-

dodecylbenzsulfonat,      0,4 Gew.-%

Polyalkylglykoläther und      0,3 Gew.-%

Ca-Alkylarylsulfonat      0,3 Gew.-%

Additive, vorzugsweise

Siccative und Verdickungsmittel      1,0 Gew.-%

Titandioxid und/oder

Füllstoffe      38,0 Gew.-%

Biozid oder Biozidgemisch      0,3 Gew.-%

Wasser      35,5 Gew.-%

—————————

     100,0 Gew.-%

5. Beispiel:

Alkydharz (berechnet als Feststoff)

(Öllänge: 40 - 70)

(Säurezahl: 2 - 20)                                      18,0 Gew.-%

wasserunlösliches organisch-

chemisches Lösungsmittelgemisch          7,5 Gew.-%

Tensidgemisch bestehend aus

Isopropyl-

dodecylbenzsulfonat                              1,0

und Polyalkylglykoläther                        0,5 Gew.-%

Additive, vorzugsweise

Siccative und Verdickungsmittel                                                      1,0 Gew.-%

Titandioxid und/oder

Füllstoffe                                              32,0 Gew.-%

Biozid oder Biozidgemisch              1,0 Gew.-%

Wasser                                                  39,0 Gew.-%
                                                        ─────────────
                                                        100,0 Gew.-%

6. Beispiel:

Alkydharz (berechnet als Feststoff)

(Öllänge: 40 - 70)

(Säurezahl: 2 - 20)                18,8 Gew.-%


wasserunlösliches organisch-

chemisches Lösungsmittelgemisch    8,0 Gew.-%


Tenside bzw. Tensidgemsich

und/oder Netzmittel bestehend aus

Polyoxyethylen(2)-

oleylalkohol                       0,3 Gew.-%

und Polyoxyethylen(10)-

oleylalkohol                       0,6 Gew.-%


Additive, vorzugsweise

Siccative und Verdickungsmittel                             1,0 Gew.-%


Titandioxid und/oder

Füllstoffe                         36,0 Gew.-%


Biozid oder Biozidgemisch           0,5 Gew.-%


Wasser                             34,8 Gew.-%
                                   ─────────────
                                   100,0 Gew.-%

7. Beispiel:

Alkydharz (berechnet als Feststoff)

(Öllänge: 40 - 70)

(Säurezahl: 2 - 20)                           24,0 Gew.-%


wasserunlösliches organisch-

chemisches Lösungsmittelgemisch    10,0 Gew.-%


Tenside bzw. Tensidgemsich

und/oder Netzmittel *                      1,7 Gew.-%


Additive, vorzugsweise

Siccative und Verdickungsmittel                                          1,0 Gew.-%


Titandioxid und/oder

Füllstoffe                                    28,0 Gew.-%


Biozid oder Biozidgemisch          0,5 Gew.-%


Wasser                                        31,3 Gew.-%


basisches Aluminium-

Zinkphosphathydrat                    3,5 Gew.-%
                                              _____

                                              100,0 Gew.-%

13

\* Ausführungsform:

7a)   Isopropyl-

dodecylbenzsulfonat         1,0 Gew.-%

Polyoxyethylen-

Sorbitan-oleat-Laurat      0,7 Gew.-%


7b)   Polyalkylglykoläther     1,36 Gew.-%

Ca-Alkylarylsulfonat      0,34 Gew.-%


7c)   Polyoxyethylen (30)-

Nonylphenol             0,7 Gew.-%

Polyalkyl-

glykoläther              1,0 Gew.-%


7d)   Polyoxyethylen(2)-

oleylalkohol           1,53 Gew.-%

Polyoxyethylen(10)-

oleylalkohol           0,17 Gew.-%


8. Beispiel:

Alkydharz (berechnet als Feststoff)

(Öllänge: 40 - 70)

(Säurezahl: 2 - 20)       25,0 Gew.-%

| | |
|---|---|
| wasserunlösliches organisch-chemisches Lösungsmittelgemisch | 10,0 Gew.-% |
| Tenside bzw. Tensidgemsich und/oder Netzmittel * | 1,7 Gew.-% |
| Additive, vorzugsweise Siccative und Verdickungs-mittel | 1,0 Gew.-% |
| Titandioxid und/oder Füllstoffe | 20,0 Gew.-% |
| Biozid oder Biozidgemisch | 0,5 Gew.-% |
| Wasser | 31,8 Gew.-% |
| basisches Aluminium-Zinkphosphathydrat | 10,0 Gew.-% |
| | 100,0 Gew.-% |

* Ausführungsform:

8a)  Isopropyl-
      dodecylbenzsulfonat          0,7 Gew.-%

|  |  |  |
|---|---|---|
| Polyoxyethylen-Sorbitan-oleat-Laurat | | 1,0 Gew.-% |
| 8b) | Polyoxyethylen (30)-Nonylphenol | 0,9 Gew.-% |
| | Polyalkyl-glykoläther | 0,8 Gew.-% |
| 8c) | Polyalkylglykoläther | 0,34 Gew.-% |
| | Ca-Alkylarylsulfonat | 1,36 Gew.-% |
| 8d) | Polyoxyethylen(2)-oleylalkohol | 0,17 Gew.-% |
| | Polyoxyethylen(10)-oleylalkohol | 0,53 Gew.-% |

## Ansprüche

1. Anstrichfarbe enthaltend mindestens ein Bindemittel oder Bindemittelgemisch und Wasser, sowie ein Tensid oder Tensidgemisch und ein wasserunlösliches oder wasserschwerlosliches Pigment oder Pigmentgemisch und/oder Füllstoff oder Füllstoffgemisch und/oder Farbstoffe sowie ggf. Zusatzstoffe, vorzugsweise Verarbeitungshilfsmittel, Sikkative, verdickungsmittel, Hilfslösemittel und Biozide, dadurch gekennzeichnet, daß der Festkörpergehalt der Anstrichfarbe, einschließlich Gesamtanteil an Bindemittel (berechnet als Feststoff), sowie der wasserunlöslichen oder wasserschwerlöslichen Pigmente und/oder Füllstoffe,

größer als 38 Gew.-%

ist, wobei der Bindemittelgehalt (berechnet als Feststoff)

größer als 15 Gew.-%

in der Anstrichfarbe ist und daß das Bindemittel oder Bindemittelgemisch aus einem öllöslichen Alkydharz und/oder mindestens einem trocknenden pflanzlichen öl besteht, wobei das Alkydharz oder Alkydharzgemisch eine Säurezahl (gemessen nach DIN 53 402) zwischen 1 - 45, eine Öllänge von 30 - 75, und einen Phthalsäureanteil zwischen 20 - 40 Gew.-% aufweist, daß das Gewichtsverhältnis von Bindemittel zu Pigment(en) und/oder Füllsoff(en)

1 : 1 bis 1 : 3,

das Gewichtsverhältnis von Bindemittel zu dem in der Anstrichfarbe enthaltenden wasserunlöslichen, organisch-chemischen schwerflüchtigen Lösungsmittel oder Lösungsmittelgemisch auf der Basis eines flüssigen aliphatischen und/oder aromatischen Kohlenwasserstoffes

20 : 1 bis 1,8 : 1,

und der Gewichtsanteil an Tensid oder Tensidgemisch, das einen Gesamt-HLB-Wert von 7 - 18 besitzt,

0,1 bis 3 Gew.-%

mindestens aus einem Alkylarylsulfonat, einem Derivat der Alkylarylsulfonsäure und/oder einem Polyoxyethylenderivat und/oder einem Polyalkylen- oder Polyalkylglykoläther und/oder einer, eine oder mehrere Polyoxyethylengruppen und/oder ein oder mehrere Fettsäuregruppen enthaltenden oberflächenaktiven organisch-chemischen Verbindung besteht oder diese(s) zu mehr als 65 Gew.-Teilen (bezogen auf 100 Gew.-Teile eingesetztes Tensidgemisch), vorzugsweise zu mehr als 80 Gew.-Teilen, enthält

sowie als Restbestandteile Wasser.

2. Anstrichfarbe nach Anspruch 1, dadurch gekennzeichnet, daß der Festkörpergehalt der Anstrichfarbe, einschließlich Gesamtanteil an Bindemitteln (berechnet als Feststoff), sowie der wasserunlöslichen oder wasserschwerlöslichen Pigmente und/oder Füllstoffe,

größer als 44 Gew.-%,

ist, daß das Gewichtsverhältnis von Bindemittel zu Pigment(en) und/oder Füllstoff(en)

1 : 1,1 bis 1 : 2,3,

das Gewichtsverhältnis von Bindemittel, vorzugsweise Alkydharz, zu dem in der Anstrichfarbe enthaltenden organisch-chemischen schwerflüchtigen Lösungsmittel oder Lösungsmittelgemisch auf der Basis eines flüssigen aliphatischen und/oder aromatischen Kohlenwasserstoffes

5 : 1 bis 2 : 1

und der Gewichtsanteil an Tensid oder Tensidgemisch, das einen Gesamt-HLB-Wert von 8 - 17 aufweist,

0,6 bis 2 Gew.-%,

beträgt

3. Anstrichfarbe nach Ansprüchen 1 und 2, dadurch gekennzeichnet, daß der Gewichtsanteil an wasserunlöslichen oder wasserschwerlöslichen Pigment(en) und/oder wasserunlöslichen oder wasserschwerlöslichen Füllstoff(en) in der Anstrichfarbe

größer als 24 Gew.-%

ist.

4. Anstrichfarbe nach Ansprüchen 1 und 2, dadurch gekennzeichnet, daß der Gewichtsanteil an wasserunlöslichen oder wasserschwerlöslichen Pigment(en) und/oder wasserunlöslichen oder wasserschwerlöslichen Füllstoff(en) in der Anstrichfarbe

größer als 29 Gew.-%

ist.

5. Anstrichfarbe nach einem oder mehreren der Ansprüche 1 bis 4, dadurch gekennzeichnet, daß der Bindemittelgehalt (berechnet als Feststoff)

größer als 17 Gew.-%,

in der Anstrichfarbe ist

6. Anstrichfarbe nach einem oder mehreren der Ansprüche 1 bis 5, dadurch gekennzeichnet, daß eine Mischung von zwei oder mehren Tensiden im Gewichtsverhältnis von

20 : 1 bis 1 : 20, vorzugsweise
5 : 1 bis 1 : 5,

in der Anstrichfarbe enthalten ist.

7. Anstrichfarbe nach einem oder mehreren der Ansprüche 1 bis 6, dadurch gekennzeichnet, daß das Tensid aus einem Gemisch von Isopropylamin-dodecylbenzylsulfonat und Polyoxyethylen-Sorbitan-Oleat-Laurat besteht.

8. Anstrichfarbe nach einem oder mehreren der Ansprüche 1 bis 6, dadurch gekennzeichnet, daß das Tensid aus einem Gemisch von polyoxyethylen(30)-Nonylphenol und/oder einem Polyalkylenglykoläther und/oder Isopropylamin-dodecylbenzylsulfonat besteht.

9. Anstrichfarbe nach einem oder mehreren der Ansprüche 1 bis 6, dadurch gekennzeichnet, daß das Tensid aus einem Gemisch von Ca-Alkylarylsulfonat und Isopropylamin-dodecylbenzylsulfonat besteht.

10. Anstrichfarbe nach einem oder mehreren der Ansprüche 1 bis 9, dadurch gekennzeichnet, daß das Tensid aus einem Gemisch aus Polyoxyethylen-(2)- und Polyoxyethylen-(10)-Oleylalkohol besteht.

11. Anstrichfarbe nach einem oder mehreren der Ansprüche 1 bis 10, dadurch gekennzeichnet, daß das in der Anstrichfarbe enthaltende Alkydharz oder Alkydharzgemisch eine Säurezahl (gemessen nach DIN 53 402) zwischen 2 - 20, eine Öllänge von 40 - 70, und einen Phthalsäureanteil zwischen 25 - 35 Gew.-%, aufweist.

12. Anstrichfarbe nach einem oder mehreren der Ansprüche 1 bis 11, dadurch gekennzeichnet, daß der Gewichtsanteil des wasserunlöslichen organisch-chemischen schwerflüchtigen öligen oder ölartigen Lösungsmittels oder Lösungsmittelgemisches in der Anstrichfarbe kleiner ist als der Gewichtsanteil Wasser.

13. Anstrichfarbe nach einem oder mehreren der Ansprüche 1 bis 12, dadurch gekennzeichnet, daß das Gewichtsverhältnis der Gewichtsanteile des wasserunlöslichen organisch-chemischen schwerflüchtigen vorzugsweise öligen oder ölartigen Lösungsmittels oder Lösungsmittelgemisches, einschließlich des darin gelösten Alkydharzes und/oder trocknenden pflanzlichen Öles, zu dem in der Anstrichfarbe enthaltenen Gewichtsanteil Wasser

. 1,5 : 1 bis 1 : 2,3, vorzugsweise
1,2 : 1 bis 1 : 1,8,

beträgt.

14. Anstrichfarbe nach einem oder mehreren der Ansprüche 1 bis 13, dadurch gekennzeichnet, daß der Gewichtsanteil des Wassers in der Anstrichfarbe um

mehr als das 2,5-fache, vorzugsweise
mehr als das 3-fache,

über den Gewichtsmengen der im Mittel enthaltenden organisch-chemischen, wasserunlöslichen vorzugsweise öligen oder ölartigen organisch-chemischen Lösungsmittel oder des Lösungsmittelgemisches liegt.

15. Anstrichfarbe nach einem oder mehreren der Ansprüche 1 bis 14, dadurch gekennzeichnet, daß die Anstrichfarbe

0,1 bis 4 Gew.-%, vorzugsweise
0,2 bis 3 Gew.-%,

mindestens eines Biozides oder Biozidgemisches, vorzugsweise eines Fungizides oder Fungizidgemisches, enthält.

16. Anstrichfarbe nach einem oder mehreren der Ansprüche 1 bis 15, dadurch gekennzeichnet, daß die wasserunlöslichen oder wasserschwerlöslichen Pigmente und/oder Füllstoffe ganz oder teilweise aus Korrosionsschutzpigmenten bestehen oder diese im Gemisch enthalten.

17. Verfahren zur Herstellung einer Anstrichfarbe nach einem oder mehreren der Ansprüche 1 bis 16, dadurch gekennzeichnet, daß bei einer Arbeits- bzw. Verfahrenstemperatur von

278 K - 308 K, vorzugsweise
280 K - 303 K,

in einem schnellaufenden Mischaggregat, vorzugsweise einem Schnellrührer, Dissolver, einer Kolloidmühle oder einem Dispergator das wasserunlösliche organisch-chemische, schwerflüchtige Lösungsmittel oder Lösungsmittelgemisch einschließlich der darin gelösten oder löslichen Bestandteile (ölige Phase) oder ein oder mehrere Bestandteile der öligen Phase mit Wasser oder den Bestandteilen der wäßrigen Phase vermischt werden, wobei das Tensid und/oder Tensidgemisch in einer oder in beiden Phasen gelöst oder homogen bzw. nahezu homogen verteilt wird.

18. Verfahren nach Anspruch 17, dadurch gekennzeichnet, daß die Durchmischung mit einer Rand- und/oder Umfangsgeschwindigkeit von

10 - 40 m/sec., vorzugsweise
15 - 30 m/sec.,

durchgeführt wird.

19. Verfahren nach einem oder mehreren der Ansprüche 16 und 18, dadurch gekennzeichnet, daß das Wasser oder die wäßrige Phase mit einer zuführungsgeschwindigkeit von

10 - 100 l/min., vorzugsweise
30 - 70 l/min.,

in die ölige oder ölartige Phase (wasserunlösliches, organisch-chemisches Lösungsmittel und darin gelöste Bestandteile), die in dem Mischbehälter vorgelegt sind, eingeleitet wird.

20. Verfahren nach einem oder mehreren der Ansprüche 16 bis 19, dadurch gekennzeichnet, daß der Durchmesser der Scheibe oder des Rührers 1/4 d bis 3/4 d (d = Durchmesser des Mischbehälter bzw. Kessels), vorzugsweise 0,3 d - 0,4 d, beträgt.

## Claims

1. Paint containing at least one binding agent or binding agent mixture and water, and also a tenside or tenside mixture and a water-insoluble or poorly water-soluble pigment or pigment mixture and/or filler or filler mixture and/or dyes and also optionally additives, preferably processing aids, siccatives, thickening agents, solubilisers and biocides, characterised in that the solids content of the paint, including the total content of binding agent (calculated as solid), and also of the water-insoluble or poorly water-soluble pigments and/or fillers, is

greater than 38% by weight,

with the content of binding agent (calculated as solid) being

greater than 15% by weight

in the paint, and that the binding agent or binding agent mixture consists of an oil-soluble alkyd resin and/or at least one drying vegetable oil, the alkyd resin or alkyd resin mixture having an acid number (measured according to DIN 53 402) of between 1 and 45, an oil length of 30 - 75, and a phthalic acid content of between 20 and 40% by weight, that the weight ratio of binding agent to pigment(s) and/or filler(s) is

1 : 1 to 1 : 3,

the weight ratio of binding agent to the water-insoluble, organic-chemical, poorly volatile solvent or solvent on the basis of a liquid aliphatic and/or aromatic hydrocarbon contained in the paint is

20 : 1 to 1.8 : 1,

and the proportion by weight of tenside or tenside mixture, which has a total HLB value of 7 - 18, consists

0.1 to 3% by weight

at least of an alkylaryl sulphonate, a derivative of alkylaryl sulphonic acid and/or a polyoxyethylene derivative and/or a polyalkyleneglycol or polyalkylglycol ether and/or a surface-active organic-chemical compound containing one or more polyoxyethylene groups and/or one or more fatty acid groups or contains more than 65 parts by weight (relative to 100 parts by weight of tenside mixture used), preferably more than 80 parts by weight, of it/them,

and also water as the remaining constituent.

2. Paint according to Claim 1, characterised in that the solids content of the paint, including the total content of binding agents (calculated as solid), and also of the water-insoluble or poorly water-soluble pigments and/or fillers, is

greater than 44% by weight,

that the weight ratio of binding agent to pigment(s) and/or filler(s) is

1 : 1.1 to 1 : 2.3,

the weight ratio of binding agent, preferably alkyd resin, to the organic-chemical, poorly volatile solvent or solvent mixture on the basis of a liquid aliphatic and/or aromatic hydrocarbon contained in the paint is

5 : 1 to 2 : 1,

and the proportion by weight of tenside or tenside mixture, which has a total HLB value of 8 - 17, is

0.6 to 2% by weight.

3. Paint according to Claims 1 and 2, characterised in that the proportion by weight of water-insoluble or poorly water-soluble pigment(s) and/or water-insoluble or poorly water-soluble filler(s) in the paint is

greater than 24% by weight.

4. Paint according to Claims 1 and 2, characterised in that the proportion by weight of water-insoluble or

20

poorly water-soluble pigment(s) and/or water-insoluble or poorly water-soluble filler(s) in the paint is

greater than 29% by weight.

5. Paint according to one or more of Claims 1 to 4, characterised in that the binding agent content (calculated as solid) in the paint is

greater than 17% by weight.

6. Paint according to one or more of Claims 1 to 5, characterised in that a mixture of two or more tensides in a weight ratio of

20 : 1 to 1 : 20, preferably
5 : 1 to 1 : 5,

is contained in the paint.

7. Paint according to one or more of Claims 1 to 6, characterised in that the tenside consists of a mixture of isopropylamine-dodecylbenzylsulphonate and polyoxyethylene-sorbitan-oleate-laurate.

8. Paint according to one or more of Claims 1 to 6, characterised in that the tenside consists of a mixture of polyoxyethylene(30)-nonylphenol and/or a polyalkyleneglycol ether and/or isopropylamine-dodecylbenzylsulphonate.

9. Paint according to one or more of Claims 1 to 6, characterised in that the tenside consists of a mixture of Ca-alkylaryl sulphonate and isopropylamine-dodecylbenzylsulphonate.

10. Paint according to one or more of Claims 1 to 9, characterised in that the tenside consists of a mixture of polyoxyethylene-(2)-oleyl alcohol and polyoxyethylene-(10)-oleyl alcohol.

11. Paint according to one or more of Claims 1 to 10, characterised in that the alkyd resin or alkyd resin mixture contained in the paint has an acid number (measured according to DIN 53 402) of between 2 and 20, an oil length of 40 - 70 and a phthalic acid content of between 25 and 35% by weight.

12. Paint according to one or more of Claims 1 to 11, characterised in that the proportion by weight of the water-insoluble, organic-chemical, poorly volatile, oily or oil-like solvent or solvent mixture in the paint is smaller than the proportion by weight of water.

13. Paint according to one or more of Claims 1 to 12, characterised in that the weight ratio of the proportions by weight of the water-insoluble, organic-chemical, poorly volatile, preferably oily or oil-like solvent or solvent mixture, including the alkyd resin and/or drying vegetable oil dissolved therein, to the proportion by weight of water contained in the paint is

1.5 : 1 to 1 : 2.3, preferably
1.2 : 1 to 1 : 1.8.

14. Paint according to one or more of Claims 1 to 13, characterised in that the proportion by weight of the water in the paint is

more than 2.5 times, preferably
more than 3 times,

the quantities by weight of the organic-chemical, water-insoluble, preferably oily or oil-like solvent or the solvent mixture contained in the agent.

15. Paint according to one or more of Claims 1 to 14, characterised in that the paint contains

0.1 to 4% by weight, preferably

0.2 to 3% by weight,

of at least one biocide or biocide mixture, preferably a fungicide or fungicide mixture.

16. Paint according to one or more of Claims 1 to 15, characterised in that the water-insoluble or poorly water-soluble pigments and/or fillers consist entirely or partly of corrosion protection pigments or contain these in a mixture.

17. Process for producing a paint according to one or more of Claims 1 to 16, characterised in that the water-insoluble, organic-chemical, poorly volatile solvent or solvent mixture including the constituents which are dissolved or soluble therein (oily phase) or one or more constituents of the oily phase are mixed with water or the constituents of the aqueous phase at an operating or process temperature of

278 K - 308 K, preferably
280 K - 303 K,

in a high-speed mixing unit, preferably a high-speed stirrer, dissolver, a colloid mill or a disperser, with the tenside and/or tenside mixture being dissolved or being distributed homogenously or almost homogenously in one or in both phases.

18. Process according to Claim 17, characterised in that the mixing is carried out at an edge speed and/or peripheral speed of

10 - 40 m/sec, preferably
15 - 30 m/sec.

19. Process according to one or more of Claims 16 [sic] and 18, characterised in that the water or the aqueous phase is introduced into the oily or oil-like phase (water-insoluble, organic-chemical solvent and constituents dissolved therein), which is placed in the mixing container, at a supply rate of

10 - 100 l/min, preferably
30 - 70 l/min.

20. Process according to one or more of Claims 16 [sic] to 19, characterised in that the diameter of the disc or of the stirrer is 1/4 d to 3/4 d (d = diameter of the mixing container or vessel), preferably 0.3 d - 0.4 d.

**Revendications**

1. Peinture contenant au moins un agent liant ou un mélange d'agents liants et de l'eau ainsi qu'un agent tensio-actif ou un mélange d'agents tensio-actifs et un pigment ou mélange de pigments insoluble ou peu soluble dans l'eau et/ou une charge ou un mélange de charges et/ou des colorants ainsi que, le cas échéant, des additifs, de préférence des agents d'ouvrabilité, des siccatifs et des biocides, caractérisée en ce que la teneur en matières solides de la peinture, y compris la teneur totale en agents liants (calculée comme matières solides) ainsi que les pigments et/ou les charges insolubles ou peu solubles dans l'eau, est
supérieure à 38% en poids,
la teneur en agents liants (calculée comme matières solides) étant
supérieure à 15% en poids
dans la peinture et en ce que l'agent liant ou le mélange d'agents liants est constitué par une résine alkyde soluble dans l'huile et/ou par au moins une huile végétale siccative, la résine alkyde ou le mélange de résines alkyde présentant un indice d'acidité (mesuré selon la norme DIN 53 402) compris entre 1 et 45, une longueur d'huile comprise entre 30 et 75, et une teneur en acide phtalique comprise entre 20 et 40% en poids, en ce que le rapport pondéral entre l'agent liant et le ou les pigments et/ou la ou les charges est compris entre
1:1 et 1:3,
en ce que le rapport pondéral entre l'agent liant et le solvant ou mélange de solvants organo-chimique, insoluble dans l'eau, peu volatile, à base d'un hydrocarbure liquide aliphatique et/ou aromatique,

contenu dans la peinture, est compris entre
20:1 et 1,8:1,
et en ce que la proportion en poids d'agent tensio-actif ou de mélange d'agents tensio-actifs, possédant une valeur HLB totale comprise entre 7 et 18, est comprise entre
0,1 et 3% en poids,
et est constituée par au moins un alkylarylsulfonate, un dérivé de l'acide alkylarylsulfonique et/ou un dérivé polyoxyéthylé et/ou un éther polyalkylène ou polyalkylglycolique et/ou un composé tensio-actif organo-chimique contenant un ou plusieurs groupes polyoxyéthylés et/ou un ou plusieurs groupes acides gras ou contenant celui-ci ou ceux-ci à plus de 65 parties en poids (par rapport à 100 parties en poids de l'agent tensio-actif utilisé), de préférence à plus de 80 parties en poids, et en ce qu'elle contient comme composant résiduel de l'eau.

2. Peinture selon la revendication 1, caractérisée en ce que la teneur en matières solides de la peinture, y compris la teneur totale en agents liants (calculée comme matière solide), ainsi qu'en pigments et/ou charges insolubles ou peu solubles dans l'eau est
supérieure à 44% en poids,
en ce que le rapport pondéral entre l'agent liant et le ou les pigments et/ou la ou les charges est compris entre
1:1,1 et 1:2,3,
en ce que le rapport pondéral entre l'agent liant, de préférence une résine alkyde, et le solvant ou mélange de solvants organo-chimique, peu volatile, à base d'un hydrocarbure liquide aliphatique et/ou aromatique contenu dans la peinture est compris entre
5:1 et 2:1
et en ce que la proportion pondérale en agent tensio-actif ou en mélange d'agents tensio-actifs, présentant une valeur HLB totale comprise entre 8 et 17, est comprise entre
0,6 et 2% en poids.

3. Peinture selon les revendications 1 et 2, caractérisée en ce que la proportion pondérale en pigment(s) insoluble(s) ou peu soluble(s) dans l'eau et/ou en charge(s) insoluble(s) ou peu soluble(s) dans l'eau dans la peinture est
supérieure à 24% en poids.

4. Peinture selon les revendications 1 et 2, caractérisée en ce que la proportion pondérale en pigment(s) insoluble(s) ou peu soluble(s) dans l'eau et/ou en charge(s) insoluble(s) ou peu soluble(s) dans l'eau dans la peinture est
supérieure à 29% en poids.

5. Peinture selon une ou plusieurs des revendications 1 à 4, caractérisée en ce que la teneur en agents liants (calculée comme matière solide) dans la peinture est
supérieure à 17% en poids.

6. Peinture selon une ou plusieurs des revendications 1 à 5, caractérisée en ce que la peinture contient un mélange de deux ou de plusieurs agents tensio-actifs dans un rapport pondéral compris entre
20:1 et 1:20, de préférence entre
5:1 et 1:5.

7. Peinture selon une ou plusieurs des revendications 1 à 6, caractérisée en ce que l'agent tensio-actif est constitué par un mélange de dodécylbenzylsulfonate d'isopropylamine et d'oléate-laurate de sorbitol polyoxyéthylé.

8. Peinture selon une ou plusieurs des revendications 1 à 6, caractérisée en ce que l'agent tensio-actif est constitué par un mélange de nonylphénol-(30) polyoxyéthylé et/ou d'éther polyalkylglycolique et/ou de dodécylbenzylsulfonate d'isopropylamine.

9. Peinture selon une ou plusieurs des revendications 1 à 6, caractérisée en ce que l'agent tensio-actif est constitué par un mélange d'alkylarylsulfonate de calcium et de dodécylbenzylsulfonate d'isopropylamine.

**10.** Peinture selon une ou plusieurs des revendications 1 à 9, caractérisée en ce que l'agent tensio-actif est constitué par un mélange d'alcool oléylique-(2) poloxyéthylé et d'alcool oléylique-(10) poloxyéthylé.

**11.** Peinture selon une ou plusieurs des revendications 1 à 10, caractérisée en ce que la résine alkyde ou le mélange de résines alkyde contenu dans la peinture présente un indice d'acidité (mesuré selon la norme DIN 53 402) compris entre 2 et 20, une longueur d'huile comprise entre 40 et 70 et une teneur en acide phtalique comprise entre 25 et 35% en poids.

**12.** Peinture selon une ou plusieurs des revendications 1 à 11, caractérisée en ce que la proportion en poids du solvant ou mélange de solvants organo-chimique, insoluble dans l'eau, peu volatile, huileux ou analogue à l'huile dans la peinture est inférieure à la proportion en poids d'eau.

**13.** Peinture selon une ou plusieurs des revendications 1 à 12, caractérisée en ce que le rapport pondéral entre les proportions en poids du solvant ou mélange de solvants organo-chimique, insoluble dans l'eau, peu volatile, de préférence huileux ou analogue à l'huile, comprenant la résine alkyde et/ou l'huile végétale siccative dissoute dans ledit solvant ou mélange de solvants, et la proportion en poids d'eau contenue dans la peinture est compris entre
1,5:1 et 1:2,3, de préférence entre
1,2:1 et 1:1,8.

**14.** Peinture selon une ou plusieurs des revendications 1 à 13, caractérisée en ce que la proportion en poids de l'eau dans la peinture est
plus de 2,5 fois, de préférence
plus de 3,5 fois,
supérieure aux quantités en poids de solvant ou mélange de solvants organo-chimique, insoluble dans l'eau, de préférence huileux ou analogue à l'huile, contenues dans l'agent.

**15.** Peinture selon une ou plusieurs des revendications 1 à 14, caractérisée en ce que la peinture contient
0,1 à 4% en poids, de préférence
0,2 et 3% en poids,
d'au moins un biocide ou mélange de biocides, de préférence un fongicide ou un mélange de fongicides.

**16.** Peinture selon une ou plusieurs des revendications 1 à 15, caractérisée en ce que les pigments et/ou les charges insolubles ou peu solubles dans l'eau consistent totalement ou partiellement en pigments de protection contre la corrosion ou contiennent ceux-ci en mélange.

**17.** Procédé pour la fabrication d'une peinture selon une ou plusieurs des revendications 1 à 16, caractérisé en ce qu'on mélange, à une température de travail comprise entre
278 K et 308 K, de préférence entre
280 K et 303 K,
dans un appareil de mélange à haute vitesse, de préférence dans un mélangeur intensif, un dissolveur, un broyeur colloïdal ou dans un disperseur, le solvant ou mélange de solvants organo-chimique, insoluble dans l'eau, peu volatile, y compris les composants dissous ou solubles dans celui-ci (phase huileuse) ou un ou plusieurs composants de la phase huileuse avec l'eau ou avec les composants de la phase aqueuse, l'agent tensio-actif et/ou le mélange d'agents tensio-actifs étant dissous ou incorporé de manière homogène ou quasiment homogène dans une ou dans les deux phases.

**18.** Procédé selon la revendication 17, caractérisé en ce que le mélange est réalisé avec une vitesse périphérique et/ou de rotation comprise entre
10 et 40 m/sec, de préférence entre
15 et 30 m/sec.

**19.** Procédé selon une ou plusieurs des revendications 16 et 18, caractérisée en ce que l'eau ou la phase aqueuse est introduite à une vitesse d'alimentation de
10 à 100 l/min, de préférence de
30 à 70 l/min,
dans la phase huileuse ou analogue à l'huile (solvant organo-chimique, insoluble dans l'eau et les composants dissous dans celui-ci) qui a été disposée au préalable dans le récipient de mélange.

20. Procédé selon une ou plusieurs des revendications 16 à 19, caractérisée en ce que le diamètre du disque ou de l'agitateur est compris entre 1/4 d et 3/4 d (d = diamètre du récipient de mélange ou de la cuve), de préférence entre 0,3 d et 0,4 d.